(19) Europäisches Patentamt
European Patent Office
Office européen des brevets

(11) Publication number: **0 476 471 A2**

(12) **EUROPEAN PATENT APPLICATION**

(21) Application number: **91115176.9**

(22) Date of filing: **09.09.91**

(51) Int. Cl.[5]: **C08L 67/03**, C08L 67/02, C08L 67/04, C08L 77/06, C08L 77/02, C08L 75/02, C08L 75/04, //(C08L67/03, 67:02),(C08L67/03,67:04), (C08L67/03,77:06),(C08L67/03, 77:02)

(30) Priority: **17.09.90 US 583103**

(43) Date of publication of application: **25.03.92 Bulletin 92/13**

(84) Designated Contracting States: **DE FR GB IT**

(71) Applicant: **THE GOODYEAR TIRE & RUBBER COMPANY**
**1144 East Market Street**
**Akron, Ohio 44316-0001(US)**

(72) Inventor: **Callander, Douglas David**
**590 San Moritz Drive**
**Akron, Ohio 44313(US)**
Inventor: **Ogata, Naoya**
**6-29-6 Asagaya-kita**
**Suginami-ku, Tokyo, 166(JP)**
Inventor: **Cohn, Gerald**
**637 Treeside Drive**
**Akron, Ohio 44313(US)**

(74) Representative: **Leitz, Paul**
**Goodyear Technical Center, Patent Department**
**L-7750 Colmar-Berg(LU)**

(54) **High modulus polymeric composition.**

(57) The present invention discloses a process for preparing polymeric compositions which exhibit high modulus and high impact strength. The techniques of this invention can be utilized to improve the modulus and impact strength of virtually any type of thermoplastic resin or thermosetting resin. The subject invention specifically relates to a process for preparing a high modulus polymeric composition which comprises: (1) polymerizing at least one diacid or diacid halide with at least one member selected from the group consisting of diols and diamines in a solution of a thermoplastic resin or thermosetting resin under conditions which result in the formation of a solution of the thermoplastic resin or thermosetting resin having a polyester or a polyamide dispersed therein; and (2) recovering the high modulus polymeric composition from the solution. It is often desirable for the polyester or polyamide to be a liquid crystalline polyester or a liquid crystalline polyamide. It is also generally desirable for the high modulus polymeric composition to be prepared by interfacial polymerization. It is also possible to prepare polyamides or polyesters by polymerizing amino aromatic acids or hydroxy aromatic acids by a direct polycondensation reaction in the solution of a thermoplastic resin or thermosetting resin.

EP 0 476 471 A2

## Background of the Invention

It is sometimes desirable to increase the modulus and impact strength of thermoplastic resins and thermosetting resins. Unfortunately, such improvements cannot always be attained by blending the thermoplastic resin or thermosetting resin with other materials. One general problem which is often encountered is that the thermoplastic resin or thermosetting resin is not compatible with materials which could conceivably improve the modulus and impact strength thereof. For instance, it is generally not possible to use conventional blending procedures for dispersing a polyester or polyamide throughout such resinous materials.

## Summary of the Invention

The subject invention reveals a technique for preparing a high modulus polymeric composition which also exhibits improved impact strength. This technique can also be utilized in the preparation of polymeric compositions which exhibit lower warpage and which allow for utilization at higher service temperatures. A particularly preferred polymeric composition is made by synthesizing a liquid crystalline polyester in the solution of a polyarylate resin. The polymeric composition which is recovered utilizing this procedure is a blend of the polyarylate having the liquid crystalline polyester dispersed therein. Such modified polyarylate compositions can be utilized in a wide variety of applications. Such compositions have a combination of properties which make them particularly attractive for utilization by the automotive industry. For instance, these polyarylate based blends can be utilized in manufacturing automobile bumpers, door handles and window trim.

The subject invention specifically discloses a process for preparing a high modulus polymeric composition which comprises: (1) polymerizing at least one diacid or diacid halide with at least one member selected from the group consisting of diols and diamines in a polymer cement of a thermoplastic resin or thermosetting resin under conditions which result in the formation of a solution having the thermoplastic or thermosetting resin and a polyester or polyamide dispersed therein; and (2) recovering the high modulus polymeric composition from the cement. The high modulus polymeric compositions prepared by this technique are highly dispersed blends of a polyester or polyamide in a thermoplastic resin or thermosetting resin. Polyamides are formed by the polymerization of a diacid or diacid halide with a diamine. Polyesters are produced by the polymerization of a diacid or diacid halide with a diol. The utilization of diacid halides, such as diacid chlorides, is generally preferred in the practice of this invention. Since the polymerization reaction is conducted in the polymer cement of a thermoplastic resin or thermosetting resin, a highly dispersed blend of the polyamide or polyester in the thermoplastic resin or thermosetting resin is produced. The highly dispersed blend of the polyamide or polyester in the resin can be recovered in dry form as a high modulus polymeric composition.

The high modulus polymer blends of this invention can be made by interfacial polymerization. In fact, interfacial polymerization is a highly preferred technique for making such high modulus polymeric compositions. It involves dissolving the diacid halide into a polymer cement of a thermoplastic resin or thermosetting resin to make an organic phase. An aqueous solution is made by mixing the diol or diamine with water. It is normally desirable in the case of diamines to add a water soluble base to the aqueous solution. In the case of diols, it is essential to add a water soluble base to the aqueous solution. In many cases it is also beneficial to include a surfactant (including phase transfer agents) in the aqueous solution. The interfacial polymerization is carried out by mixing the organic and aqueous phases and providing agitation.

The subject invention more specifically discloses a process for preparing a high modulus polymeric composition by interfacial polymerization which comprises: (1) preparing an aqueous phase which is comprised of (a) water and (b) a diol or a diamine; (2) preparing an organic phase which is comprised of (a) a cement (solution) of a thermoplastic resin or thermosetting resin and (b) a diacid halide; (3) mixing the aqueous phase with the organic phase under conditions wherein agitation is provided and which are sufficient for polymerization to occur which results in the formation of a polyamide or polyester; and (4) recovering the high modulus polymeric composition from the aqueous phase and organic phase.

The subject invention further reveals a process for preparing a high modulus polymeric composition which comprises: (1) dispersing an aqueous phase which is comprised of (a) water and (b) a diol or a diamine throughout an organic phase which is comprised of (a) a solution of a thermoplastic resin or thermosetting resin and (b) a diacid halide at a temperature and under conditions which result in the formation of a polyamide or polyester; and (2) recovering the high modulus polymeric composition.

The techniques of this invention can also be utilized in the preparation of polymeric compositions which are comprised of a thermoplastic resin or a thermosetting resin having a polyurea or a polyurethane

dispersed therein. Such polymeric compositions are prepared by polymerizing at least (1) diisocyanate with at least one member selected from the group consisting of diols and diamines in a solution of a thermoplastic resin or a thermosetting resin under conditions which result in the formation of a solution having a polyurea or polyurethane dispersed therein; and (2) recovering the high modulus polymeric composition from the solution. Such high modulus polymeric compositions are highly dispersed blends of a polyurethane or polyurea throughout the thermoplastic resin or thermosetting resin. Polyureas are formed by the polymerization of a diisocyanate with a diamine. Polyurethanes are produced by the polymerization of a diisocyanate with a diol. Since the polymerization reactions of this invention are conducted in the polymer cement of a thermoplastic resin or thermosetting resin, a highly dispersed blend of the polyurea or polyurethane throughout the polymer solution is produced. The highly dispersed blend of the polyurea or polyurethane in the thermoplastic resin or thermosetting resin can be recovered in dry form as a high modulus polymeric composition.

## Detailed Description of the Invention

Virtually any type of thermoplastic resin or thermosetting resin can be utilized in preparing the high modulus polymeric compositions of this invention. Some representative examples of thermoplastic resins which can be employed include polyethylene, polypropylene, polystyrene, polyvinylchloride, polymethylmethacrylate, polyarylates, polyamides, and polycarbonate. Phenolic resins and urea resins are representative of thermosetting resins which can be utilized. A solution of the thermoplastic resin or thermosetting resin is made by simply dissolving the resin in an organic solvent. Virtually any organic solvent which is capable of dissolving the thermoplastic resin or thermosetting resin can be utilized.

The polyamide or polyester can be synthesized by simply adding a diacid or diacid chloride and a diamine or diol to the solution of the thermoplastic resin or thermosetting resin. It is usually desirable to also add a polar organic solvent to the polymer solution. Such polar organic solvents should be good solvents for the diol or diamine and should also be miscible in the non-polar solvent which will typically be utilized in the solution of the thermoplastic resin or thermosetting resin. Some representative examples of such polar organic solvents include methyl ethyl ketone, tetrahydrofuran, methylene chloride, chloroform, pyridine and dimethylsulfoxide. In many cases, it is desirable to dissolve the diol or diamine in the polar organic solvent and then to mix the solution of the diol or diamine into the solution of the thermoplastic resin or thermosetting resin.

A stoichiometric amount of diacid or diacid chloride and diamine or diol will typically be added. The amount of monomers added will depend upon the desired level of incorporation of the polyamide or polyester in the highly dispersed blend being prepared. Typically an amount of monomers sufficient to prepare a blend containing from about 2 weight percent to about 50 weight percent of the polyamide or polyester will be added. It is typically preferred for the highly dispersed blend to contain from about 5 weight percent to about 40 weight percent of polyamide or polyester. The most preferred amount of polyamide or polyester in the blend will depend upon the ultimate application of the high modulus polymeric composition. As a general rule, amounts within the range of about 10 weight percent to about 30 weight percent are most preferred.

The solution of the monomers in the polymer cement will normally contain from about 5 weight percent to about 35 weight percent monomers and polymers, based upon the total weight of the polymerization medium (monomers, polymer, and solvent). The polymerization medium will preferably contain from about 10 percent to about 30 percent monomers and polymers. It will generally be more preferred for the polymerization medium to contain from about 15 weight percent to about 25 weight percent monomers and polymers. In commercial operations, the polymerization medium will typically contain about 20 weight percent monomers and polymers.

It is also possible to synthesize polyesters in the solution of a thermoplastic resin or thermosetting resin by the polymerization of a hydroxy aromatic acid. It is also possible to prepare polyamide by polymerizing amino aromatic acids in the solution of a thermoplastic resin or thermosetting resin. Thus, in an alternative embodiment of this invention, the high modulus polymeric composition is prepared by polymerizing a hydroxy aromatic acid or an amino aromatic acid in the solution of a thermoplastic resin or thermosetting resin.

In a highly preferred embodiment of this invention, the polyamide or polyester will be synthesized by interfacial polymerization. The polymerization medium used in such interfacial polymerizations is comprised of an aqueous phase and an organic phase. The aqueous phase is comprised of water and at least one diol or diamine monomer. The aqueous phase will also normally contain a water soluble base. Diamines can be employed so as to serve as both the base and a monomer. However, it is important to include a water

soluble base in cases where diol monomers are employed. The water soluble base will usually be an inorganic base such as sodium hydroxide. It is highly desirable to include a surfactant in the aqueous phase in cases where diol monomers are being employed. Anionic surfactants are generally preferred for this purpose. Cationic phase transfer agents are also useful.

The organic phase is comprised of a polymer solution of a thermosetting resin or thermoplastic resin, optionally, a polar organic solvent and a diacid halide. The polymer solution is a solution of at least one thermoplastic resin or thermosetting resin in at least one nonpolar organic solvent. The organic phase can be made by mixing the diacid halide into the polymer solution. The polar organic solvent used should be a good solvent for the diacid halide.

The interfacial polymerization is carried out by mixing the organic phase with the aqueous phase and providing agitation. The weight ratio of the organic phase to the aqueous phase will generally be within the range of about 10:90 to about 90:10 with a ratio of 30:70 to 70:30 being preferred. Such interfacial polymerizations can be conducted over a very wide temperature range from about 0°C up to about 100°C. It is normally preferred for such polymerizations to be conducted at a temperature which is within the range of about 20°C to about 50°C.

Virtually any type of diacid or diacid chloride can be used in making the high modulus rubber compositions of this invention. The diacids which can be employed will normally have the structural formula:

$$HO-\overset{O}{\overset{\|}{C}}-A-\overset{O}{\overset{\|}{C}}-OH$$

wherein A represents an alkylene group containing from 1 to about 12 carbon atoms or an arylene group containing from 6 to about 30 carbon atoms. Such alkylene groups will preferably contain from 2 to 10 carbon atoms. It is normally preferred for the diacid to be aromatic with terephthalic acid and isophthalic acid being highly preferred.

The diacid halides which can be utilized normally have the structural formula:

$$R-\overset{O}{\overset{\|}{C}}-A-\overset{O}{\overset{\|}{C}}-R$$

wherein A represents an alkylene group containing from 1 to about 12 carbon atoms or an arylene group containing from 6 to about 30 carbon atoms and wherein R represents a halogen atom. Such alkylene groups will preferably contain from 2 to 10 carbon atoms. The diacid halide will normally be a diacid fluoride, a diacid chloride or a diacid bromide. Diacid chlorides are normally preferred. It is normally preferred for the diacid chloride to be an aromatic diacid chloride, such as terephthaloyl chloride.

Polyamides can be prepared by reacting virtually any type of diamine monomer with the diacid or diacid chloride. The diamines which can be used normally have the structural formula: $H_2N$-A-$NH_2$ wherein A represents an alkylene group containing from 2 to about 30 carbon atoms or an arylene group containing from 6 to about 30 carbon atoms. Some representative examples of diamine monomers which can be utilized include ethylene diamine, phenylene diamine, 1,6-hexanediamine, neopentyl glycol, naphthalyne diamines, 1,4-butylene diamine, piperazine, hydrazine, and the like.

The diols which can be employed in making polyesters will generally have the structural formula: HO-A-OH wherein A represents an alkylene group containing from about 6 to about 30 carbon atoms or an arylene group containing from 6 to about 30 carbon atoms. Some representative examples of diols which can be employed include 1,6-hexanediol, cyclohexane dimethanol, hydroquinone, resorcinol, bisphenol-A and the like.

In an alternative embodiment of this invention, polyamides can be synthesized in the solution of a thermoplastic resin or thermosetting resin by polymerizing monomers having the structural formula: $H_2N$-R-COOH, wherein R represents an alkylene group containing from 2 to about 30 carbon atoms or an arylene group containing from 6 to about 30 carbon atoms. It is normally desirable to catalyze such polymerizations with a catalyst system which is comprised of (1) a phosphorus containing compound, such as phenylphosphine dichloride, hexachlorocyclotriphosphatriazene, triphenylphosphine, or diphenyl chlorophosphate;

and (2) at least one acid acceptor. Polymeric agents having pendant diphenylphosphine dichloride groups can also be used in conjunction with an acid acceptor as a catalyst system. Such catalyst systems are described in greater detail in U.S. Patent 4,668,762 and by Kitayama, Sanui and Ogata, "Synthesis of Aromatic Polyesters by Direct Polycondensation with Triphenylphosphine Dichloride", 22 Journal of Polymer Science:Polymer Chemistry Edition 2705-2712 (1984) the teachings of which are incorporated herein by reference. Such direct polycondensation reactions can also be catalyzed by employing p-toluenesulfonyl chloride in the presence of N,N-dimethylformamide. Such a catalyst system is described in greater detail by Higashi, Akiyama, Takahashi and Koyama, "Direct Polycondensation of Aromatic Dicarboxylic Acids and Bisphenols with Tosylchloride and N,N-dimethylformamide in Pyridine", 22 Journal of Polymer Science:Polymer Chemistry Edition 1653-1660 (1984) the teachings of which are hereby incorporated herein by reference.

Blends containing polyureas or polyurethanes can be synthesized in the solution of a thermoplastic resin or thermosetting resin by simply adding a diisocyanate and a diamine or diol thereto.

An approximate stoichiometric amount of diisocyanate and diamine or diol will typically be added. The amount of monomers added will depend upon the desired level of incorporation of the polyurethane or polyurea in the highly dispersed blend being prepared. Typically an amount of monomers sufficient to prepare a blend containing from about 2 weight percent to about 50 weight percent of the polyurea or polyurethane will be added. It is typically preferred for the highly dispersed blend to contain from about 5 weight percent to about 40 weight percent of polyurea or polyurethane. The most preferred amount of polyurea or polyurethane in the blend will depend upon the ultimate application of the high modulus polymeric composition. As a general rule, amounts within the range of about 10 weight percent to about 30 weight percent are most preferred.

The solution of the monomers in the rubber cement will normally contain from about 5 weight percent to about 35 weight percent monomers and polymers, based upon the total weight of the polymerization medium (monomers, polymer, and solvent). The polymerization medium will preferably contain from about 10 percent to about 30 percent monomers and polymers. It will generally be more preferred for the polymerization medium to contain from about 15 weight percent to about 25 weight percent monomers and polymers. In commercial operations, the polymerization medium will typically contain about 20 weight percent monomers and polymers.

Virtually any type of diisocyanate monomer can be utilized. These diisocyanate monomers will typically have the structural formula:

O = C = N-A-N = C = O

wherein A represents an alkylene, cycloalkylene, arylene or cycloarylene moiety. Some representative examples of diisocyanate monomers which can be employed include 1,6-hexamethylene diisocyanate, 4,4'-methylene diphenyl diisocyanate, toluene diisocyanate, naphthalene diisocyanate, and isophorone diisocyanate. Isophorone diisocyanate is also known as 5-isocyanato-1-(isocyanatomethyl)-1,3,3-trimethylcyclohexane and has the structural formula:

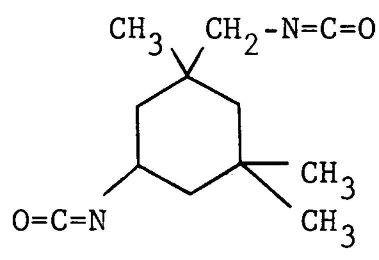

Polyureas can be prepared by reacting virtually any type of diamine monomer with the diisocyanate monomer. Some representative examples of diamine monomers which can be utilized include ethylene diamine, phenylene diamine, 1,6-hexanediamine, naphthalyne diamines, 1,4-butylene diamine, piperazine, hydrazine and the like. By the same token, polyurethanes can be prepared by reacting virtually any diol with the diisocyanate monomer. Some representative examples of diol monomers which can be employed include ethylene glycol, butylene glycol, neopentyl glycol, cyclohexane dimethanol and 1,6-hexanediol. Small amounts of polyiisocyanates, polyamines, or polyols can be copolymerized into the polymer to cause cross-linking. In some cases, it is desirable to utilize an aromatic diamine because of the generally fast

reaction rate which is attained.

The polyurea or polyurethane can be synthesized in the polymer solution over a wide temperature range. As a matter of convenience, such solution polymerizations are typically conducted at room temperature (about 20°C to about 30°C). However, such polymerizations can generally be conducted at any temperature within the range of about 0°C to about 200°C.

This invention is illustrated by the following working examples which are presented merely for the purpose of illustration and are not to be regarded as limiting the scope of the invention or the manner in which it can be practiced. Unless specifically indicated otherwise, parts and percentages are given by weight.

## Example 1

A solution of 4.65 grams phenylhydroquinone (0.025 mole), 4.0 grams 50% sodium hydroxide (0.05 mole) in distilled water and 5 ml 30% sodium lauryl sulfate in 150 ml distilled water was prepared and added to a Waring Blender. A solution of 4.064 grams terephthaloyl chloride (0.02 mole), 1.016 grams isophthaloyl chloride (0.005 mole) and 7.93 grams Ardel™ D-100 in 75 ml chloroform was added to the Waring Blender in one portion. The blender was then immediately turned on at high speed for 5 minutes. At the end of this time the resulting emulsion was poured into 1000 ml acetone to coagulate the polyarylate containing the in-situ formed copolyester of phenylhydroquinone-terephthalate/isophthalate in the molar ratio 100-80/20. The polymer was filtered, washed with acetone, then transferred and washed with distilled water in the blender under high speed agitation. The polymer was then filtered and washed with distilled water. The blender washing and filtration was repeated two more times. At the end of this time, the polymer composite was dried in a vacuum oven for 16 hours at 105°C. The blend, a tan opaque solid, had a melting point of 284°C as measured by differential scanning calorimetry. No chlorine was detected, via an argentimetric technique, in the blend which contains about 50% phenylhydroquinone-terephthalate/isophthalate and 50% polyarylate.

## Example 2

A solution of 0.465 grams phenylhydroquinone (0.0025 mole), 0.40 grams 50% sodium hydroxide (0.005 mole) and 5 ml 30% sodium lauryl sulfate in 200 ml distilled water was prepared and added to a Waring Blender. A solution of 0.457 grams terephthaloyl chloride (0.00225 mole), 0.0508 grams isophthaloyl chloride (0.00025 mole); and 14.274 grams Ardel™ D-100 polyarylate in 100 ml methylene chloride was added to the Waring Blender in one portion. The blender was then immediately turned on, at high speed, for five minutes. At the end of this time the resulting emulsion was poured into 1000 ml acetone to coagulate the polyarylate containing the in-situ formed copolyester of phenylhydroquinone-terephthalate/isophthalate in the molar ratio 100-90/10. The polymer was filtered, washed with acetone, then transferred and washed with distilled water in the Waring Blend under high speed agitation. The polymer blend was then filtered and washed with distilled water. The polymer washing and filtration in the blender was repeated two more times. At the end of this time the polymer blend was air dried, then dried in a vacuum oven for 16 hours at 120°C. The blend, a tan opaque solid, had a melting point of 343°C as measured by differential scanning calorimetry. The blend contains about 5 weight percent polyphenylhydroquinone-terephthalate/isophthalate and 95% polyarylate.

## Example 3

In this experiment a highly dispersed blend of polyaminobenzoic acid in a polyarylate was prepared. The polyarylate utilized in this experiment was Ardel™ D-100 polyarylate. In the procedure utilized 5.75 grams of the polyarylate and 2.745 grams of p-aminobenzoic acid were dissolved in a mixed solvent system containing 80 ml of methylene chloride and 10 ml of pyridine. Then 6.3 grams of triphenylphosphine was added to the solution. After complete dissolution, 7.1 grams of hexachloroethane was added to the solution with vigorous stirring. The polymerization reaction was carried out at 25°C for a period of 24 hours.

After the addition of the hexachloroethane, an exothermic reaction took place and the solution which was initially clear turned to a thick-mill suspension, due to the formation of polyaminobenzoic acid in the solution of polyarylate. However, no phase separation occurred. In fact, the polyaminobenzoic acid was so well dispersed in the solution that no precipitation or coagulation took place on standing for several weeks.

The entire suspension was poured into excess methanol and the polymer which precipitated was

collected by filtration. The polymer recovered was washed repeatedly with methanol so as to extract unreacted monomer and triphenylphosphine oxide which was formed by the direct polycondensation. The polymer blend recovered was subsequently dried in vacuum. The polymeric composition recovered weighed 8.16 grams. This represents a conversion of about 99 percent. The blend recovered accordingly contained about 29 weight percent polyaminobenzoic acid and about 71 weight percent polyarylate.

Example 4

In this experiment a highly dispersed blend of polyhydroxybenzoic acid in polyarylate was prepared. In the procedure utilized, 5.77 grams of the polyarylate and 2.762 grams of p-hydroxybenzoic acid were dissolved in 250 ml of 1,1,2,2-tetrachloroethane, followed by a complete dissolution of 5.508 grams of triphenylphosphine in the solution. Then 5.681 grams of hexachloroethane was added and the solution was heated to 100 °C for complete dissolution. The solution was subsequently cooled to a temperature of 25 °C. Direct polymerization was initiated by the addition of 5.6 ml of triethylamine. The polymerization was allowed to continue for a period of 24 hours. No phase separation occurred and the suspension formed was very stable and no precipitation or coagulation took place.

The suspension produced was poured into excess methanol and the polymer blend which precipitated was collected by filtration. The polymer composition recovered was washed several times with methanol and was subsequently dried by vacuum. The polymer blend recovered weighed 7.32 grams which represents a conversion of 65 percent. The polymer blend contained about 21 weight percent polyhydroxybenzoic acid and about 79 weight percent polyarylate.

Solutions of the polymer compositions recovered in Examples 3 and 4 were prepared by dissolving 1.2 grams of the blend into 15 ml of chloroform. The solutions were casted onto glass plates. The chloroform was allowed to evaporate at room temperature to form films of the two blends which were prepared. The film containing polyaminobenzoic acid was slightly reddish and the film containing polyhydroxybenzoic acid was slight opaque. Infrared analysis of the films confirmed the formation of polyaminobenzoic acid and polyhydroxybenzoic acid in the polyarylate.

The tensile strength and tensile modulus of the films were measured at 23 °C, 100 °C and 150 °C using a Shimazu Autograph IS-2000. The film samples were between 0.11 mm and 0.14 mm thick, were 10 mm wide and 50 mm long. A tensile speed of 1.5 mm/minutes was employed. As a control, a film cast from polyarylate was also evaluated. The results of this tensile testing is shown in Table I.

Table I
Mechanical Properties of the
Cast Films at Various Temperatures

| Sample | Temp. (°C) | Tensile Strength (MPa) | Tensile Strength (MPa) |
|---|---|---|---|
| Polyarylate | 23 | 41 | 1800 |
| | 100 | 20 | 980 |
| | 150 | 7.3 | 270 |
| Polyarylate/ poly(hydroxybenzoic acid) blend | 23 | 33 | 2100 |
| | 100 | 21 | 1300 |
| | 150 | 6.0 | 400 |
| Polyarylate/ poly(aminobenzoic acid) blend | 23 | 30 | 2100 |
| | 100 | 20 | 1300 |
| | 150 | 13 | 1100 |

As can be seen, the incorporation of polyhydroxybenzoic acid or polyaminobenzoic acid into the polyarylate by the technique of this invention significantly improved the tensile modulus of the polyarylate. This improvement is significant both at room temperature and at elevated temperatures. In fact, the polyarylate/polyaminobenzoic acid blend exhibited a very impressive tensile modulus at 150 °C. In this particular case, the tensile modulus of the blend was over 400 percent greater than that of the polyarylate control.

While certain representative embodiments and details have been shown for the purpose of illustrating the subject invention, it will be apparent to those skilled in this art that various changes and modifications can be made therein without departing from the scope of the subject invention.

## Claims

1. A process for preparing a high modulus polymeric composition which is characterized by: (1) polymerizing at least one diacid or diacid halide with at least one member selected from the group consisting of diols and diamines in a solution of a thermoplastic resin or thermosetting resin under conditions which result in the formation of a polymer solution having a polyester or polyamide dispersed therein; and (2) recovering the high modulus polymer composition from the solution.

2. A process for preparing a high modulus polymeric composition by interfacial polymerization which is characterized by: (1) dispersing an aqueous phase which is comprised of (a) water and (b) a diol or a diamine throughout an organic phase which is comprised of (a) a solution of a thermoplastic resin or a thermosetting resin and (b) a diacid halide, at a temperature and under conditions which result in the formation of a polyamide or polyester; and (2) recovering the high modulus polymeric composition.

3. A process as specified in claim 1 characterized in that said thermoplastic resin or said thermosetting resin is a polyarylate resin; characterized in that said diacid or diacid halide is a diacid halide; and characterized in that said process is conducted at a temperature which is within the range of about 20 °C to about 50 °C.

4. A process as specified in claim 1 or 3 characterized in that the diol or diamine is dissolved in a polar organic solvent with the solution of the diol or diamine in the polar organic solvent being subsequently added to the polymer solution.

5. A process as specified in claim 2 characterized in that the aqueous phase is further comprised of a surfactant and a water soluble base.

6. A process as specified in claim 2 or 5 characterized in that the ratio of the organic phase to the aqueous phase is within the range of 30:70 to 70:30, and characterized in that said process is conducted at a temperature which is within the range of about 20°C to about 50°C.

7. A process as specified in claim 2, 5 or 6 characterized in that said diacid chloride is terephthaloyl chloride; and characterized in that said diol or diamine is phenylhydroquinone.

8. A process for preparing a high modulus polymeric composition which is characterized by: (1) polymerizing at least one diisocyanate with at least one member selected from the group consisting of diols and diamines in a polymer solution of a thermoplastic resin or thermosetting resin under conditions which result in the formation of a polymer solution having a polyurea or polyurethane dispersed therein; and (2) recovering the high modulus polymeric composition from the polymer solution.

9. A process for preparing a high modulus polymeric composition which is characterized by: (1) polymerizing at least one diisocyanate with at least one member selected from the group consisting of diols and diamines in a polymer solution of a thermoplastic resin or thermosetting resin under conditions which result in the formation of a polymer solution having a polyurea or polyurethane dispersed therein; and (2) recovering the high modulus polymeric composition from the polymer solution.

10. A process as specified in claim 9 characterized in that p-amino benzoic acid or p-hydroxy benzoic acid is polymerized in step (1).